(19) European Patent Office — Europäisches Patentamt — Office européen des brevets

(11) **EP 0 649 264 B1**

## (12) EUROPEAN PATENT SPECIFICATION

(45) Date of publication and mention of the grant of the patent:
**28.06.2000 Bulletin 2000/26**

(51) Int. Cl.⁷: **H04N 9/64**

(21) Application number: **94307625.7**

(22) Date of filing: **18.10.1994**

(54) **Video signal processing apparatus**

Videosignalverarbeitungsgerät

Appareil de traitement de signal vidéo

(84) Designated Contracting States:
**DE FR GB**

(30) Priority: **19.10.1993 JP 26101993**

(43) Date of publication of application:
**19.04.1995 Bulletin 1995/16**

(73) Proprietor: **SONY CORPORATION**
**Tokyo (JP)**

(72) Inventor:
**Hayakawa, Tomoo,**
**c/o Intellectual Property Div.**
**Shinagawa-ku, Tokyo 141 (JP)**

(74) Representative:
**Cotter, Ivan John et al**
**D. YOUNG & CO.**
**21 New Fetter Lane**
**London EC4A 1DA (GB)**

(56) References cited:
**US-A- 4 395 729**

• **PATENT ABSTRACTS OF JAPAN vol. 10, no. 5 (E-372), 10 January 1986 & JP-A-60 167589 (TOSHIBA K.K.), 30 August 1985,**

**Description**

This invention relates to video signal processing apparatus or circuits. Embodiments of the invention may for example be used with a video tape recorder (VTR) in which a chroma signal of a PAL video signal is averaged, i.e. the hue of a picture is matched.

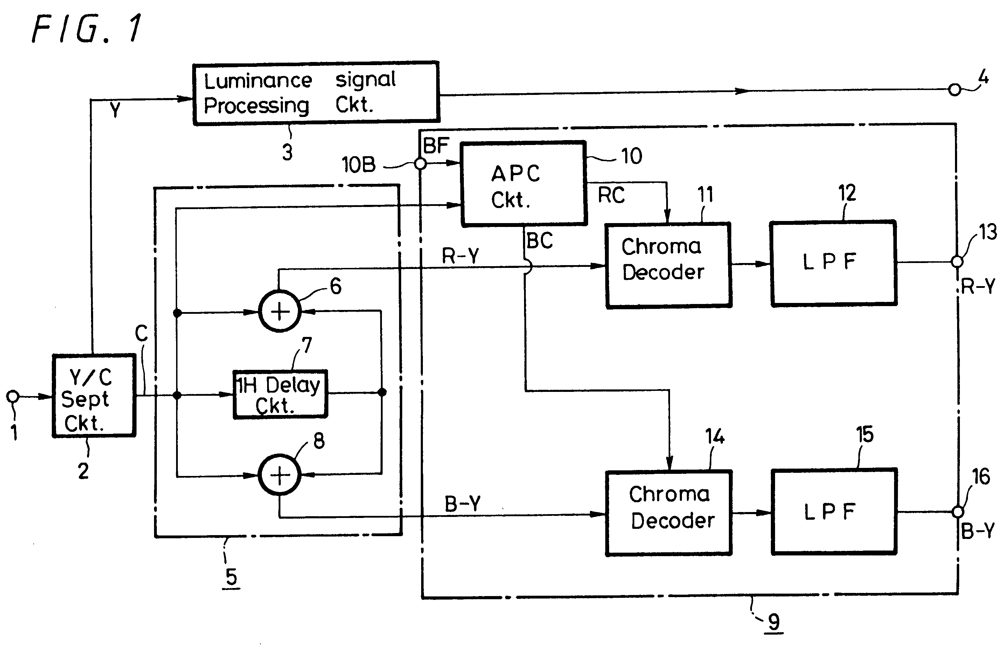

FIG. 1 of the accompanying drawings shows an example of a previously proposed video signal processing apparatus for use with a VTR in which a chroma signal of a PAL video signal is averaged, i.e. the hue of a picture is matched.

As shown in FIG. 1, the video signal processing apparatus comprises a Y/C separating circuit 2 for separating a composite video signal, such as a PAL video signal or the like, supplied thereto through an input terminal 1 from a signal source (not shown) to provide a luminance signal Y and a chroma signal C, a luminance signal processing circuit 3 for processing the luminance signal Y supplied thereto from the Y/C separating circuit 2, an averaging circuit 5 for averaging the chroma signal C supplied thereto from the Y/C separating circuit 2 to provide red and blue color difference signals R-Y and B-Y and a decoder 9 for decoding the red and blue color difference signals R-Y and B-Y supplied thereto from the averaging circuit 5.

The averaging circuit 5 is composed of adding circuits 6, 8 and a 1H delay circuit 7 having a delay time of 1H (H represents one horizontal period). The adding circuit 6 subtracts the 1H-preceding chroma signal C delayed by the 1H delay circuit 7 from the chroma signal C supplied thereto from the Y/C separating circuit 2 to provide a chroma signal C for an averaged red color difference signal R-Y. The adding circuit 8 adds the chroma signal C supplied thereto from the Y/C separating circuit 2 and the 1H-preceding chroma signal C delayed by the 1H delay circuit 7 to provide a chroma signal C for an averaged blue color difference signal B-Y.

The decoder 9 comprises an automatic phase control (APC) circuit 10 for extracting a burst signal from the chroma signal C supplied thereto from the Y/C separating circuit 2 based on a burst flag BF representing the position of a burst signal supplied thereto through an input terminal 10B from other circuit, such as a VTR (not shown) or the like to generate a subcarrier RC of the red color difference signal R-Y and a subcarrier BC of the blue color difference signal B-Y, a chroma decoder 11 for decoding the chroma signal C for the red color difference signal R-Y supplied thereto from the averaging circuit 5 based on the subcarrier RC supplied thereto from the APC circuit 10, a chroma decoder 14 for decoding the chroma signal C for the blue color difference signal B-Y supplied thereto from the averaging circuit 5 based on the subcarrier BC supplied thereto from the APC circuit 10, a low-pass filter (LPF) 12 for filtering out a decoded output from the chroma decoder 11 to provide an envelope signal and outputting the same through an output terminal 13 as a red color difference signal R-Y, and a low-pass filter (LPF) 15 for filtering out a decoded output from the chroma decoder 14 to provide an envelope signal and outputting the same through an output terminal 16 as a blue color difference signal B-Y.

The reason that the chroma signal is averaged by the adding circuits 6, 8 and the delay circuit 7 in the averaging circuit 5 is that the chroma signal in the PAL video signal is modulated under the condition that the red color difference signal R-Y is inverted in polarity at every horizontal period (i.e., in a phase alternation line fashion). Thus, even when a hue distortion (differential phase (DP), etc.) exists in a signal transmission system, it is possible to obtain a decoded output having no hue distortion by averaging the chroma signal by using a 1H delay line, more precisely, a delay line having a delay time of "1H-1/4 subcarrier wavelength" when the chroma signal is decoded.

Operation of the above video signal processing apparatus will be described below.

The composite color video signal applied to the input terminal 1 is separated by the Y/C separating circuit 2 into the luminance signal Y and the chroma signal C. The luminance signal Y from the Y/C separating circuit 2 is processed by the luminance signal processing circuit 3 in a predetermined signal processing fashion and then output through the output terminal 4.

The chroma signal C from the Y/C separating circuit 2 is averaged by the averaging circuit 5 and thereby output as the chroma signal C for the red color difference signal R-Y and the chroma signal C for the blue color difference signal B-Y.

The chroma signal C for the red color difference signal R-Y is decoded by the chroma decoder 11, filtered out by the LPF 12 as the envelope signal and then output from the output terminal 13 as the red color difference signal R-Y.

The chroma signal C for the blue color difference signal B-Y is decoded by the chroma decoder 14, filtered out by the LPF 15 as the envelope signal and then output from the output terminal 16 as the blue color difference signal B-Y.

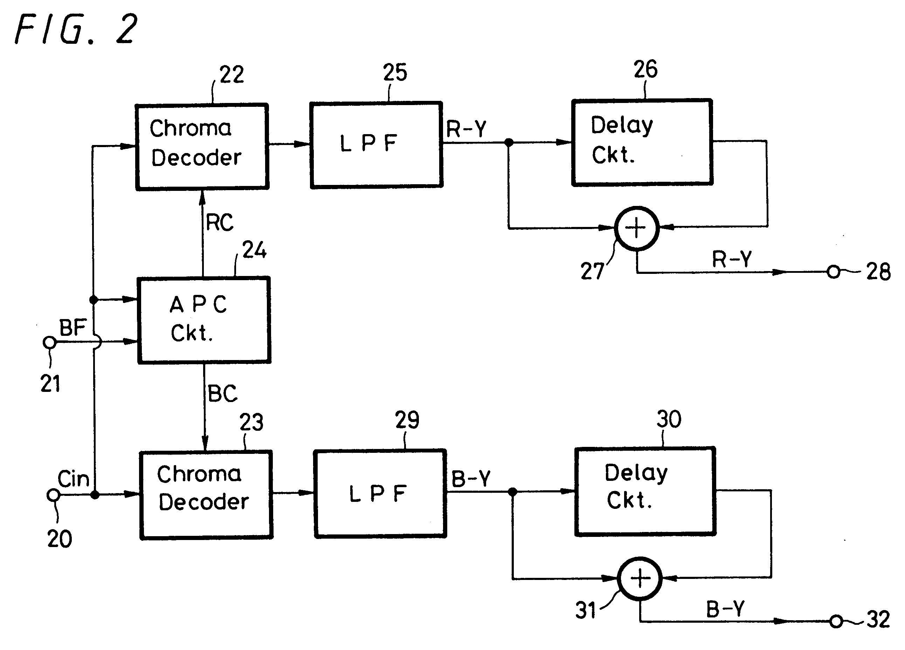

According to the video signal processing apparatus shown in FIG. 1, a positional displacement on a picture (referred to hereinafter as "mis-registration") of 57 nanoseconds occurs in the horizontal direction and a hue displacement is caused by a delay time error of the delay circuit 7. For this reason, the delay circuit 7 must be designed to be highly accurate without delay time error. To solve this problem, as shown in FIG. 2, a video signal processing apparatus is proposed to average a chroma signal after the chroma signal was decoded.

FIG. 2 shows a circuit arrangement of the proposed video signal processing apparatus in which a chroma signal is averaged after the chroma signal was decoded.

As shown in FIG. 2, this video signal processing apparatus comprises chroma decoders 22, 23 for decoding a chroma signal Cin supplied thereto through an input terminal 20 from a signal source (not shown), an APC circuit 24 for extracting the subcarrier RC for the red color difference signal R-Y and the subcarrier BC for the blue color difference signal B-Y from the chroma signal Cin supplied thereto through the input terminal 20 based on the burst flag BF supplied thereto through an input terminal 21 from a signal source (not shown), a low-pass filter (LPF) 25 for filtering out a decoded output supplied thereto from the chroma decoder 22, a low-pass filter 29 for filtering out a decoded output supplied thereto from the chroma decoder 23, a delay circuit 26 for delaying the red color difference signal R-Y supplied thereto from the LPF 25, a delay circuit 30 for delaying the blue color difference signal B-Y supplied thereto from the LPF 29, an adding circuit 27 for averaging the red color difference signal R-Y from the LPF 25 and a 1H-preceding red color difference signal R-Y supplied thereto from the delay circuit 26 by addition and an adding circuit 31 for averaging the blue color difference signal B-Y from the LPF 29 and a 1H-preceding blue color difference signal B-Y supplied thereto from the delay circuit 30 by addition.

Operation of the video signal processing apparatus shown in FIG. 2 will be described below.

When the chroma signal Cin from the signal source (not shown) is supplied through the input terminal 20 to the chroma decoders 22, 23 and the APC circuit 24, the subcarrier RC for the red color difference signal R-Y and the subcarrier BC for the blue color difference signal B-Y are extracted by the APC circuit 24. Then, the subcarrier RC is supplied to the chroma decoder 22 and the subcarrier BC is supplied to the chroma decoder 23, respectively.

The chroma decoder 22 decodes the chroma signal Cin supplied thereto based on the subcarrier RC supplied thereto from the APC circuit 24 and supplies the decoded output through the LPF 25 to the delay circuit 26. The chroma decoder 23 decodes the chroma signal Cin supplied based on the subcarrier BC supplied thereto from the APC circuit 24 and supplies the decoded output through the LPF 29 to the delay circuit 30.

The delay circuit 26 delays the red color difference signal R-Y supplied thereto from the LPF 25 by a delay time of 1H. The delay circuit 30 delays the blue color difference signal B-Y supplied thereto from the LPF 29 by a delay time of 1H. The adding circuit 27 adds the red color difference signal R-Y supplied thereto from the LPF 25 and the 1H-preceding red color difference signal R-Y supplied thereto from the delay circuit 26 and outputs the added result through an output terminal 28 as an averaged red color difference signal R-Y. The adding circuit 31 adds the blue color difference signal B-Y supplied thereto from the LPF 29 and the 1H-preceding blue color difference signal B-Y supplied thereto from the delay circuit 30 and outputs the added result through an output terminal 32 as an averaged blue color difference signal B-Y.

The present applicants have previously proposed a VTR which can obtain a satisfactory reproduced image having no chromatic blur by recording correlated chroma signals of adjacent tracks when video signals from a plurality of signal sources, i.e., 2-channel video signals or video signals with much more channels are recorded simultaneously (see Japanese Patent Application Publication No. JP-A-3-163991).

Further, the present applicants have previously proposed a recording and reproducing apparatus (see Japanese Patent Application Publication No. JP-A-62-190999) according to which, upon playback, a luminance signal obtained from a reproduced video signal is supplied through an interpolation 1/2 H delay circuit to one switching contact of a switching circuit and the luminance signal is similarly supplied through an interpolation averaging circuit formed of a 1H delay circuit to another switching contact of the switching circuit, whereby a luminance signal is developed at a common contact of the switching circuit. Upon recording, the interpolation averaging circuit functions as a comb filter for separating the luminance signal from the video signal. Therefore, a reproduction averaging circuit and a recording comb filter need not be formed separately and the circuit arrangement of the recording and reproducing apparatus can therefore be simplified.

If a chroma signal were obtained by averaging a chroma signal of nth line and a chroma signal of n+1th line, the resultant chroma signal would be placed at the position between the nth line and the n+1th line. Accordingly, the position of the luminance signal Y also should be shifted by half of the line. However, the luminance signal Y can be shifted only at the unit of 1H so that the luminance signal Y is placed at the n+1th line in actual practice. As a result, the luminance signal Y is shifted by half of the line from the original position.

Therefore, when a processing, such as dubbing or the like in which the chroma signal C is repeatedly processed by the video signal processing apparatus shown in FIGS. 1 and 2, is repeatedly carried out, a frequency characteristic in the vertical direction is not satisfactory so that the luminance signal Y and the chroma signal C are positionally displaced from each other. There is then the disadvantage that picture quality is deteriorated in which color of a high vertical frequency component becomes light as the number of dubbing is increased.

Further, although the video signal processing apparatus shown in FIG. 2 can overcome the shortcoming that the video signal processing apparatus shown in FIG. 1 encountered, the video signal processing apparatus shown in FIG. 2 includes the delay circuits 26, 30 and the adding circuits 27, 31 in association with the red and blue color difference signals R-Y and B-Y wherein the adding circuit 27 averages the red color difference signal R-Y and the 1H-preceding red color difference signal R-Y delayed by the delay circuit 26 by addition and the adding circuit 30 averages the blue color difference signal B-Y and the 1H-preceding color difference signal B-Y delayed by the delay circuit 30.

Consequently, there occurs a mis-registration in the vertical direction. Thus, when a processing for repeatedly processing the chroma signal C by the video signal processing apparatus shown in FIG. 1, or when a picture composed of a red upper portion and a blue lower portion is repeatedly dubbed, there is then the disadvantage that picture quality is considerably deteriorated which the blue lower portion is reduced in area each time the dubbing is repeated.

The mis-registration in the vertical direction will be described with reference to FIG. 3. The case that the frequency characteristic of the vertical direction is not satisfactory will be described with reference to FIG. 4. Further, the state that picture quality is deteriorated when a chroma signal is decoded by a chroma decoding circuit using a 1H delay line will be described with reference to FIG. 5.

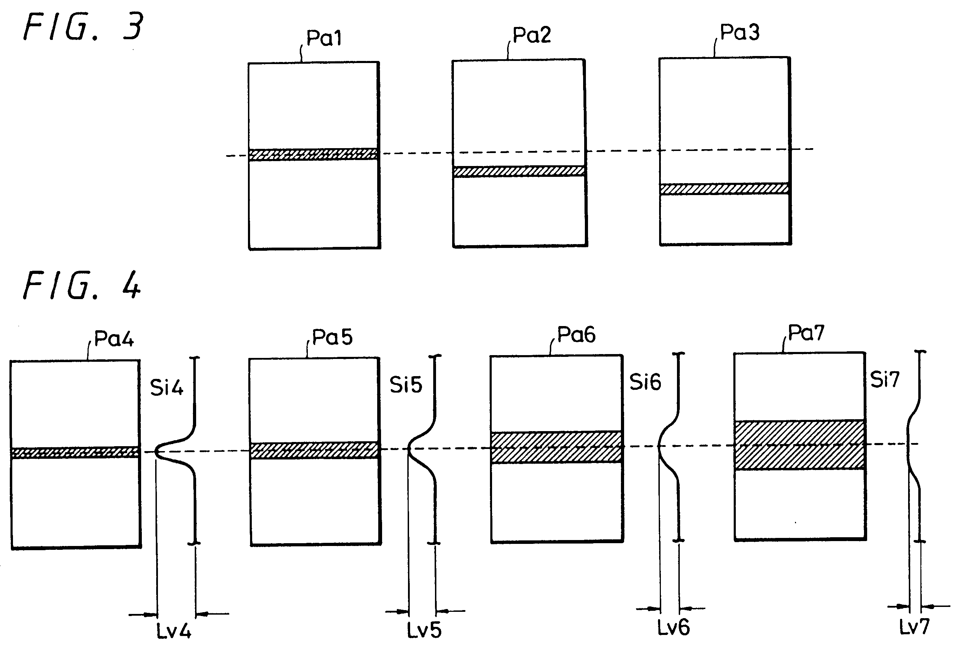

In FIG. 3, there are provided image patterns Pa1, Pa2 and Pa3 on the picture screens, respectively. In the image patterns Pa1, Pa2 and Pa3, a broken line depicts a position of an original image portion, and a hatched portion depicts "boundary of color" or "colored fine horizontal line". The image Pa1 is the original image and therefore the hatched portion is placed at the correct position. If the image Pa1 is processed one time by the circuit, then the hatched portion of the image Pa1 is shifted in the lower direction as shown by the hatched portion of the image Pa2. If the image Pa1 is processed twice by the circuit, then the hatched portion of the image Pa1 is further shifted in the lower direction as shown by the hatched portion of the image Pa3 as compared with the hatched portion of the image Pa2. This positional displacement in the vertical direction is referred to as mis-registration in the vertical direction.

The case that the frequency characteristic of the vertical direction is not satisfactory will be described with reference to FIG. 4. In FIG. 4, reference symbols Pa4, Pa5, Pa6 and Pa7 depict image patterns on the picture screens, respectively. Reference symbols Si4, Si5, Si6 and Si7 depict signals corresponding to the image patterns Pa4, Pa5, Pa6 and Pa7. Hatched portions in the image patterns Pa4, Pa5, Pa6 and Pa7 depict "colored fine horizontal lines". Reference symbols Lv4, Lv5, Lv6 and Lv7 depict levels of the signals Si4, Si5, Si6 and Si7 at their portions corresponding to the hatched portions of the image patterns Pa4, Pa5, Pa6 and Pa7, respectively. The image pattern Pa4 represents the original image.

If a finite impulse response (FIR) filter has fewer taps, a frequency characteristic in the vertical direction is not satisfactory. In this case, if the image pattern Pa4 is processed once by the circuit, the image pattern Pa4 is changed to the image pattern Pa5. As shown by the image pattern Pa5, a width of the hatched portion of the image pattern Pa5 is increased as compared with that of the hatched portion of the image pattern Pa4, and color of the hatched portion of the image pattern Pa4 becomes light because the hatched portion represents the colored fine horizontal line, i.e., the high frequency component in the vertical direction. From a signal standpoint, it is to be noted that the level Lv4 of the signal Si4 at its portion corresponding to the hatched portion of the image Pa4 is lowered as shown by the level Lv5 of the signal Si5 at its portion corresponding to the hatched portion of the image Pa5.

If the image pattern Pa4 is processed twice by the circuit, then the image pattern Pa4 is changed to the image pattern Pa6. As shown by the image pattern Pa6, a width of the hatched portion of the image pattern Pa6 is increased as compared with that of the hatched portion of the image pattern Pa4, and color of the image pattern Pa6 becomes light because the hatched portion of the image pattern represents the colored fine horizontal line, i.e., the high frequency component in the vertical direction. From a signal standpoint, it is to be noted that the level Lv4 of the signal Si4 at its portion corresponding to the hatched portion of the image pattern Pa4 is lowered as shown by the level Lv6 of the signal Si6 at its portion corresponding to the hatched portion of the image pattern Pa6.

If the image pattern Pa4 is processed three times by the circuit, then the image pattern Pa4 is changed to the image pattern Pa7. As shown by the image pattern Pa7, a width of the hatched portion of the image pattern Pa7 is increased as compared with that of the hatched portion of the image pattern Pa4, and color of the image pattern Pa7 becomes light because the hatched portion represents the colored fine horizontal line, i.e., the high frequency component in the vertical direction. From a signal standpoint, it is to be noted that the level Lv4 of the signal Si4 at its portion corresponding to the hatched portion of the image pattern Pa4 is lowered as shown by the level Lv7 of the signal Si7 of the image pattern Pa7 at its portion corresponding to the hatched portion.

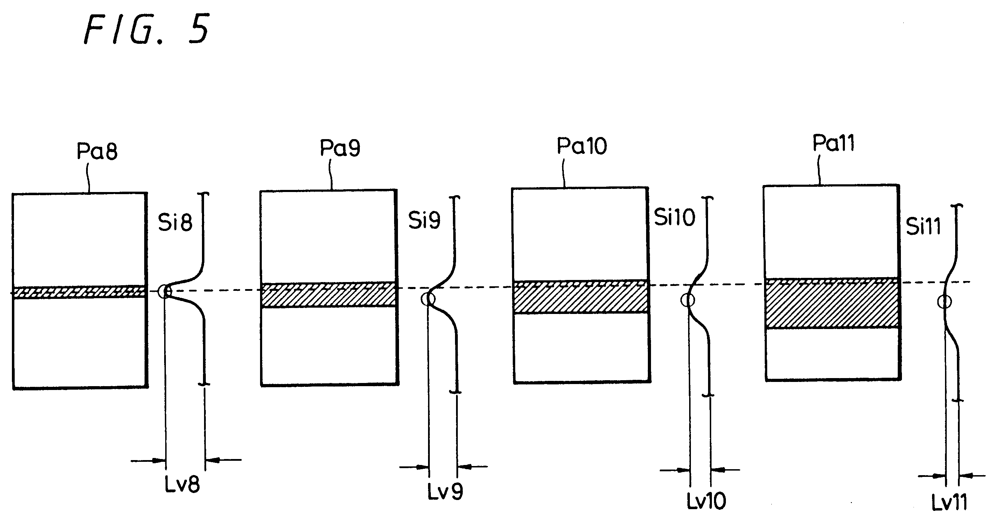

The state that picture quality is deteriorated when the chroma signal is decoded by the chroma decoders (shown in FIGS. 1 and 2) using the delay lines will be described below with reference to FIG. 5.

In FIG. 5, reference symbols Pa8, Pa9, Pa10 and Pa11 depict image patterns on the picture screens. Reference symbols Si8, Si9, Si10 and Si11 depict signals corresponding to the image patterns Pa8, Pa9, Pa10 and Pa11, respectively. Hatched portions of the image patterns Pa8, Pa9, Pa10 and Pa11 depict "colored fine horizontal lines", respectively. Reference symbols Lv8, Lv9, Lv10 and Lv11 depict levels of the signals Si8, Si9, Si10 and Si11 at their portions corresponding to the hatched portions of the image patterns Pa8, Pa9, Pa10 and Pa11, respectively. The image pattern Pa8 represents the original image.

In the chroma decoders using the delay lines, the image pattern is shifted due to the occurrence of mis-registration in the vertical direction as shown in FIG. 3. Moreover, the width of the high frequency component in the vertical direction is increased and the color level is lowered due to unsatisfactory frequency characteristic in the vertical direction as shown in FIG. 4. In this case, if the image pattern Pa8 is processed once by the circuit, then the image pattern Pa8 is changed to the image pattern Pa9. As shown by the image pattern Pa9, a width of the hatched portion of the image pattern Pa9 is increased as compared with that of the hatched portion of the image pattern Pa8, and color of the image pattern Pa9 becomes light and the position of the image pattern Pa9 is shifted because the hatched portion represents the colored fine horizontal line, i.e., the high frequency component in the vertical direction. From a signal standpoint, it is to be noted that the level Lv8 of the signal Si8 at its portion corresponding to the hatched portion of the image pattern Pa8 is lowered as shown by the level Lv9 of the signal Si9 at its portion corresponding to the hatched portion of the image pattern Pa9 and a peak portion shown by an open circle in the signal Si9 is shifted from the original position shown by the broken line.

If the image pattern Pa8 is processed twice by the circuit, then the image pattern Pa8 is changed to the image pattern Pa10. As shown by the image pattern Pa10, a width of the hatched portion of the image pattern Pa10 is increased as compared with that of the hatched portion of the image pattern Pa8. Also, color of the image pattern Pa10 becomes light and the position of the image pattern Pa10 is further shifted as compared with the image pattern Pa9 because the hatched portion represents the colored fine horizontal line, i.e., the high frequency component in the vertical direction. From a signal standpoint, it is to be noted that the level Lv8 of the signal Si8 at its portion corresponding to the hatched portion of the image pattern Pa8 is lowered as shown by the level Lv10 of the signal Si10 at its portion corresponding to the hatched portion of the image pattern Pa10, and the peak portion shown by an open circle in the signal Si10 is shifted from the original position shown by the broken line.

If the image pattern Pa8 is processed three times by the circuit, then the image pattern Pa8 is changed to the image pattern Pa11. As shown by the image pattern Pa11, a width of the hatched portion of the image pattern Pa11 is increased as compared with that of the hatched portion of the image pattern Pa8. Also, color of the image pattern Pa11 becomes light and the position of the image pattern Pa11 is further shifted because the hatched portion represents the colored fine horizontal line, i.e., the high frequency component in the vertical direction. From a signal standpoint, it is to be noted that the level Lv8 of the signal Si8 at its portion corresponding to the hatched portion of the image pattern Pa8 is lowered as shown by the level Lv11 of the signal Si11 at its portion corresponding to the hatched portion of the image pattern Pa11 and the peak portion shown by an open circle in the signal Si11 is shifted from the original position shown by the broken line.

Patent Abstracts of Japan, Volume 10, number 5 (E-372), 10 January 1986 provides an abstract of Japanese application JP-A-60167589 (Toshiba K.K.) 30 August 1985. This abstract discloses a circuit to realise chrominence vertical profile correction where color difference signals B-Y and R-Y are demodulated and derived from respective latch circuits. The color difference signal B-Y is input into a delay circuit including cascaded 1H delay circuits. Assuming part signals in the 1H delay circuits to be B1, B2 and B3, the signals B1 and B3 are input into an adder and the signal B2 is input into another added through a coefficient multiplier. A further adder performs an additional operation of adding an output signal B4 of the first adder to the signal B2 after passing through the coefficient multiplier, thus performing a -B1+3B2-B3 operation for obtaining a color difference signal B-Y subjected to vertical profile correction from the second adder 36. Similar computations are performed for the color difference signal R-Y.

According to the invention there is provided a video signal processing circuit comprising a decoder for decoding a composite color difference signal modulated such that two color difference signals are inverted in polarity at every horizontal period to provide a red color difference signal R-Y and a blue color difference signal B-Y, a first filter composed of 2N delay means, where $N$ is a positive integer, for sequentially delaying said red color difference signal R-Y from said decoder by one horizontal period each, (2N+1) multiplying circuits, each for multiplying with a predetermined coefficient a respective one of said color difference signals R-Y delayed by said 2N delay means and said color difference signal supplied thereto from said decoder, and an adding circuit for adding outputs of said multiplying circuits and a second filter composed of 2N delay means for sequentially delaying said blue color difference signal B-Y from said decoder by one horizontal period each, (2N+1) multiplying circuits, each for multiplying with a predetermined coefficient a respective one of said blue color difference signals B-Y delayed by said 2N delay means and said color difference signal supplied thereto from said decoder, and an adding circuit for adding outputs of said multiplying circuits, wherein a total sum of coefficients of odd-numbered multiplying circuits and a total sum of coefficients of even-numbered multiplying circuits in said first filter are made equal, and a total sum of coefficients of odd-numbered multiplying circuits and a total sum of coefficients of even-numbered multiplying circuits in said second filter are made equal.

Embodiments of the invention described hereinbelow seek to provide a video signal processing apparatus in which mis-registration that a chroma signal is positionally shifted in the longitudinal direction relative to a luminance signal can be avoided, and in which a frequency characteristic in the vertical direction can be increased. The embodiments also seek to provide a video signal processing apparatus in which deterioration of picture quality can be reduced considerably, even when dubbing is repeated.

The invention will now be further described, by way of illustrative and non-limiting example, with reference to the accompanying drawings, in which:

EP 0 649 264 B1

FIG. 1 is a block diagram showing an example of a circuit arrangement of a previously proposed video signal processing apparatus;

FIG. 2 is a block diagram showing another example of a circuit arrangement of a previously proposed video signal processing apparatus;

FIG. 3 is a schematic diagram used to explain the occurrence of mis-registration in the vertical direction;

FIG. 4 is a schematic diagram used to explain a case in which an FIR filter has fewer taps (frequency characteristic in the vertical direction is not satisfactory);

FIG. 5 is a schematic diagram used to explain a case in which picture quality is deteriorated when a chroma signal is decoded by chroma decoder circuits using 1H delay lines;

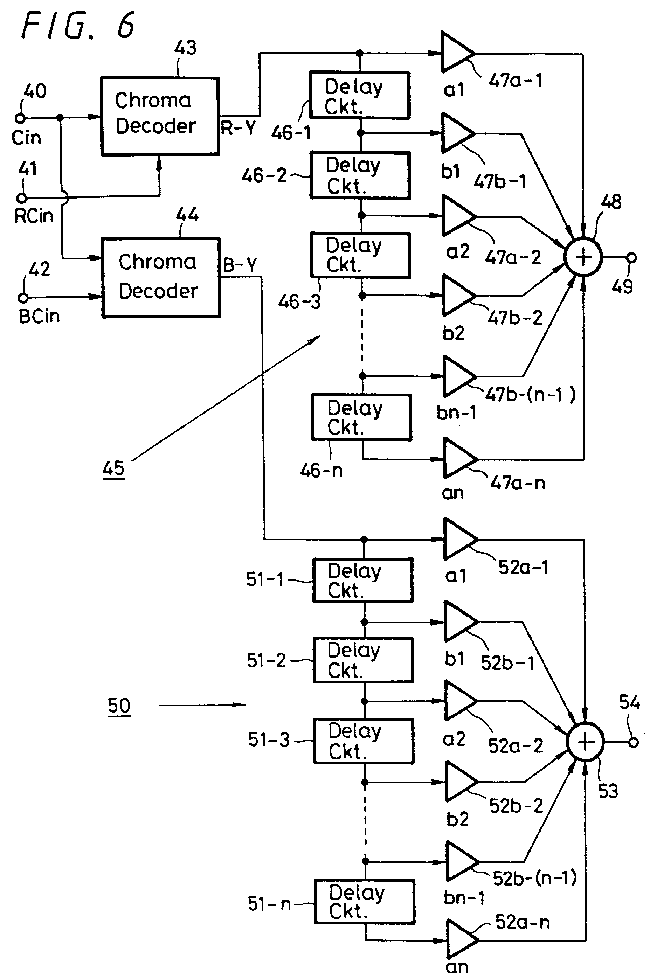

FIG. 6 is a block diagram showing a circuit arrangement of a video signal processing apparatus according to a first embodiment of the invention;

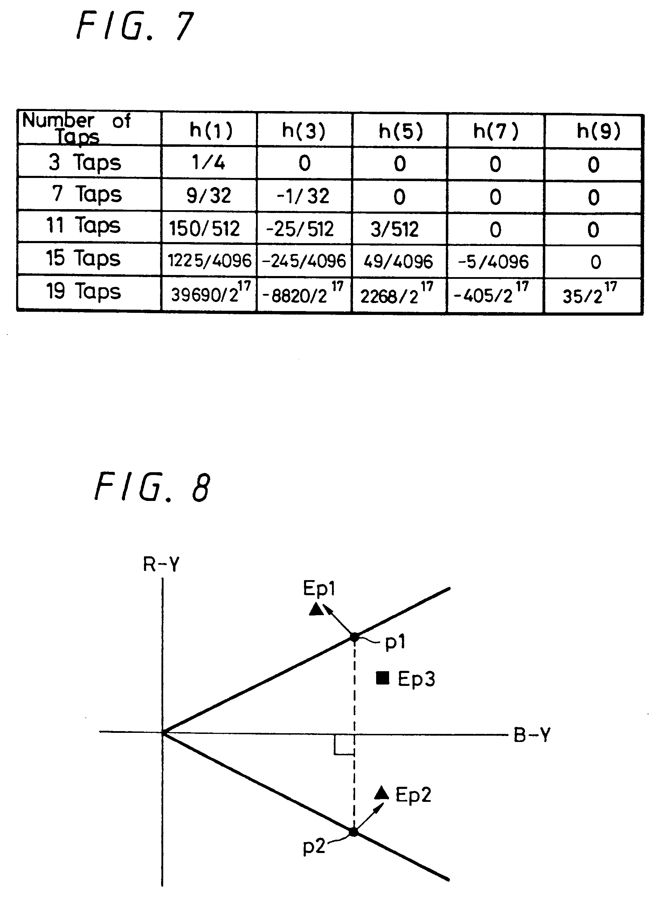

FIG. 7 is a table used to explain a relationship between the number of taps and coefficients;

FIG. 8 is a diagram used to explain processing for correcting a hue displacement;

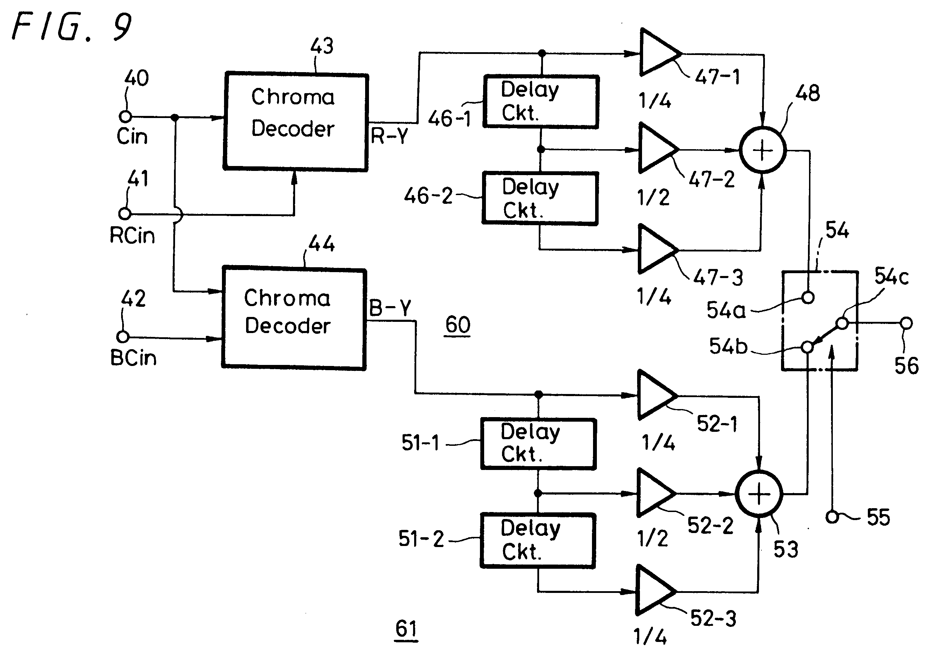

FIG. 9 is a block diagram showing a circuit arrangement of a video signal processing apparatus according to a second embodiment of the invention;

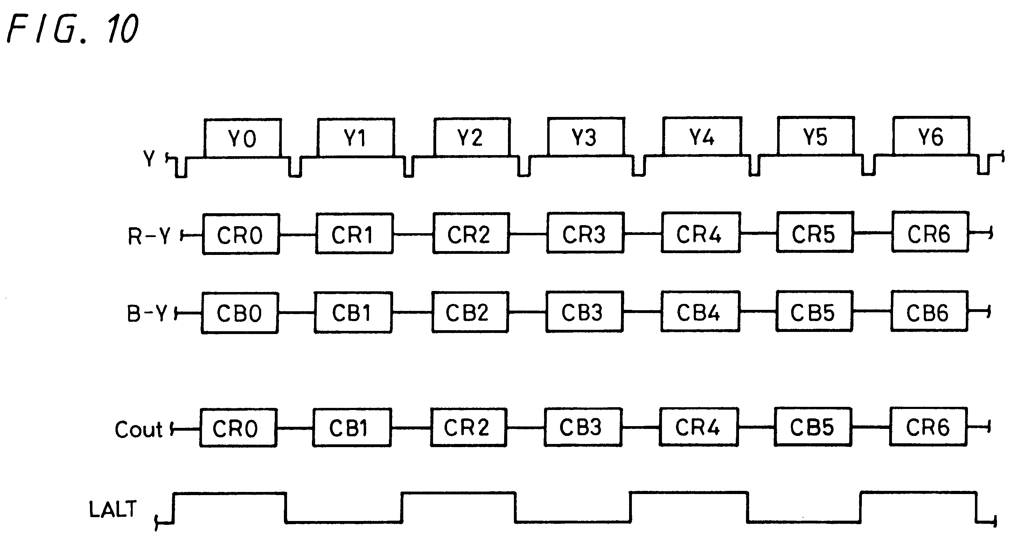

FIG. 10 is a timing chart used to explain a processing operation by which a PAL video signal is converted to a video signal of chroma line-sequential format;

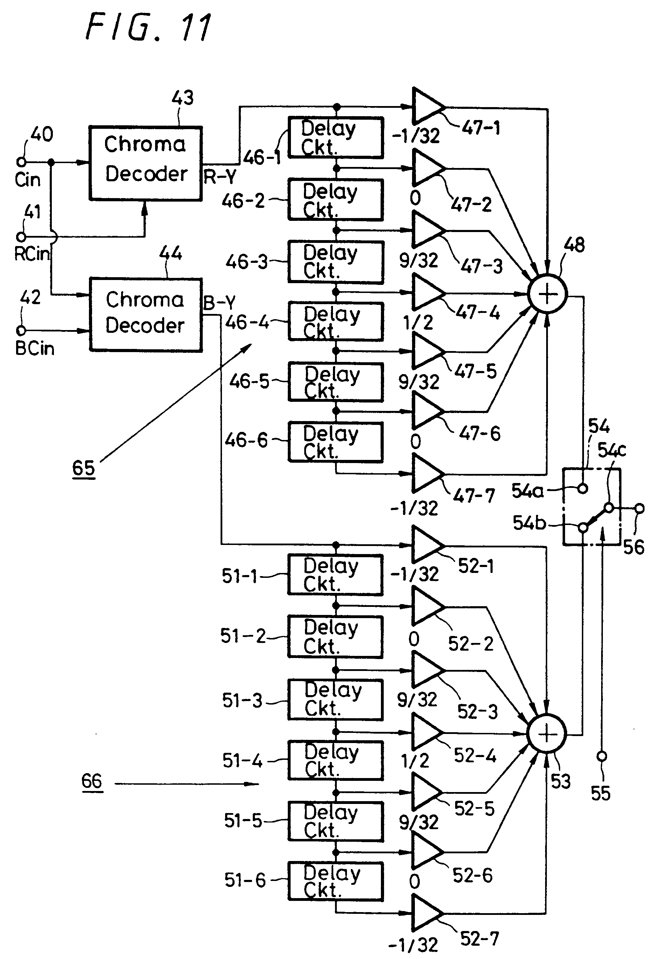

FIG. 11 is a block diagram showing a circuit arrangement of a first specific example of implementation of the video signal processing apparatus according to the second embodiment of the invention;

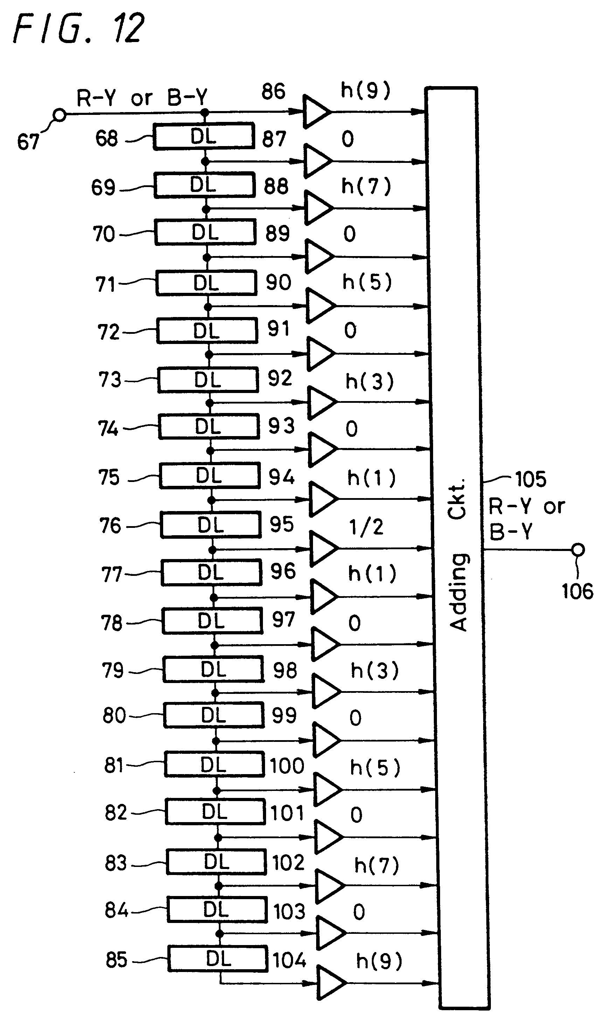

FIG. 12 is a block diagram showing a circuit arrangement of a second specific example of implementation of the video signal processing apparatus according to the second embodiment of the invention; and

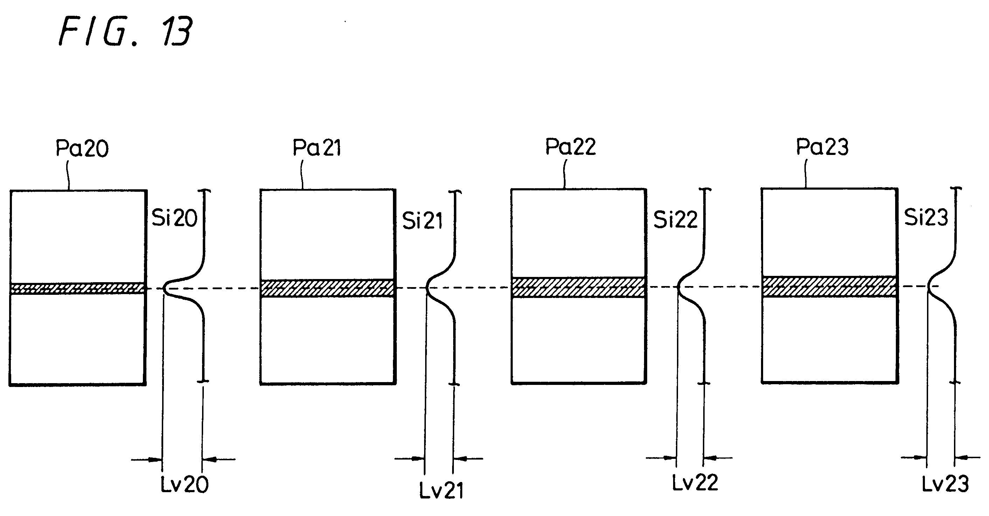

FIG. 13 is a schematic diagram used to explain effects achieved by embodiments of the invention according to which a vertical frequency characteristic can be improved by increasing the number of taps of the FIR filter.

Referring to the drawings in detail, and initially to FIG. 6, a video signal processing apparatus according to a first embodiment of the present invention will be described hereinafter.

As shown in FIG. 6, a chroma signal Cin from a Y/C separating circuit (not shown) or a signal source (not shown) is supplied to an input terminal 40. A subcarrier RCin for a red color difference signal R-Y from an APC circuit (not shown) is supplied to an input terminal 41. A subcarrier BCin for a blue color difference signal B-Y from an APC circuit (not shown) is supplied to an input terminal 42. Processing and arrangements of the Y/C separating circuit and the APC circuit are similar to those of the video signal processing apparatus shown in FIGS. 1 and 2 and therefore need not be illustrated and described.

As shown in FIG. 6, a chroma decoder 43 has a 1H delay line, for example, and decodes the chroma signal Cin supplied thereto through the input terminal 40 based on the subcarrier RCin supplied thereto through the input terminal 41, obtains an envelope signal by using an incorporated low-pass filter (not shown) or the like and supplies the envelope signal thus obtained to an FIR filter 45 as a red color difference signal R-Y. A chroma decoder 44 has a 1H delay line, for example, and decodes the chroma signal Cin supplied thereto through the input terminal 40 based on the subcarrier BCin supplied thereto through the input terminal 42, obtains an envelope signal by using an incorporated low-pass filter (not shown) or the like and supplies the envelope signal thus obtained to an FIR filter 50 as a blue color difference signal B-Y.

As shown in FIG. 6, the FIR filter 45 is constructed such that an output terminal of the chroma decoder 43 is connected to an input terminal of a delay circuit 46-1 and an input terminal of a multiplying circuit 47a-1, an output terminal of the delay circuit 46-1 is connected to an input terminal of a delay circuit 46-2 and an input terminal of a multiplying circuit 47b-1, an output terminal of the delay circuit 46-2 is connected to an input terminal of a delay circuit 46-3 and an input terminal of a multiplying circuit 47a-2, ..., an output terminal of a delay circuit 46-n is connected to an input terminal of a multiplying circuit 47a-n, output terminals of multiplying circuits 47a-1, 47b-1, ..., 47a-n are connected to input terminals of an adding circuit 48 and an output terminal of the adding circuit 48 is connected to an output terminal 49, respectively.

The FIR filter 50 is constructed such that an output terminal of the chroma decoder 44 is connected to an input terminal of a delay circuit 51-1 and an input terminal of a multiplying circuit 52a-1, an output terminal of the delay circuit 51-1 is connected to an input terminal of a delay circuit 51-2 and an input terminal of a multiplying circuit 52b-1, an output terminal of the delay circuit 51-2 is connected to an input terminal of a delay circuit 51-3 and an input terminal of a multiplying circuit 52a-2, ..., an output terminal of a delay circuit 51-n is connected to an input terminal of a multiplying circuit 52a-n, output terminals of multiplying circuits 52a-1, 52b-1, ..., 52a-n are connected to input terminals of an adding circuit 53 and an output terminal of the adding circuit 53 is connected to an output terminal 54, respectively.

A delay time of each of the delay circuits 46-1, 46-2, ..., 46-n and the delay circuits 51-1, 51-2, ..., 51-n is constantly selected to be one horizontal period (1H). The multiplying circuits 47a-1, 47b-1, ..., 47a-n and the multiplying circuits 52a-1, 52b-1, ..., 52a-n will be referred to hereinafter as "taps", respectively. The number of taps of each of the

6

FIR filters 45 and 50 is selected to be three or greater and also selected to be odd-number.

Relationship between coefficients of the odd-numbered multiplying circuits 47a-1, 47a-2, ..., 47a-n of the FIR filter 45 and those of the even-numbered multiplying circuits 47b-1, 47b-2, ..., 47b-(n-1) of the FIR filter 45 and relationship between coefficients of the odd-numbered multiplying circuits 52a-1, 52a-2, ..., 52a-n of the FIR filter 50 and the even-numbered multiplying circuits 52b-1, 52b-2, ..., 52b-(n-1) of the FIR filter 50 are selected so as to satisfy the following equation (1):

$$a1 + a2 + \cdot \cdot \cdot \cdot + an = b1 + b2 + \cdot \cdot \cdot \cdot + bn \qquad (1)$$

FIG. 7 is a table showing examples of coefficients corresponding to the number of taps of the FIR filters 45 and 50. In FIG. 7, h(x) represents the positions of taps. Examples of coefficients will be described with reference to FIG. 7. A coefficient of a tap that is located at the center, i.e., center tap constantly becomes 1/2 regardless of the number of taps. A coefficient of a tap that is located adjacent to the center tap becomes h(1). To be more concrete, a value of h(1) becomes 1/4 when the number of taps is 3, and 9/32 when the number of taps is 7. Further, a value of h(3) becomes -1/32 when the number of taps is 7. Similarly, values are determined with respect to h(5), h(7), h(9), respectively.

Shift of hue and correction of shift of hue based on the averaging processing will further be described with reference to FIG. 8. In FIG. 8, a vertical axis represents the red color difference signal and a horizontal axis represents the blue color difference signal to thereby show a hue vector amount. In FIG. 8, "solid circle p1" represents a point which shows correct hue on the nth line, "solid circle P2" represents a point which shows correct hue on the n+1th line, "solid triangle Ep1" represents a point which shows shifted hue on the nth line, and "solid triangle Ep2" represents a point which shows shifted hue on the n+1th line.

When hue of a line-alternated video signal, such as a PAL video signal modulated such that the red color difference signal R-Y is inverted in polarity at every horizontal period (1H), is shifted as shown by the solid triangle point Ep2, if this video signal is decoded by using the subcarrier modulated in a phase alternation line fashion, then the solid triangle point Ep2 is shifted to a solid square point Ep3. Thus, it is possible to obtain the solid circle point p2 of the correct hue by averaging the chroma signals by the FIR filters 45 and 50 shown in FIG. 6. The reason for this is that an average value between the points Ep1 and Ep3 becomes the point pl as is apparent from FIG. 8. Specifically, according to this embodiment, shift of hue is corrected by averaging the shifts of hue in the chroma signal of the PAL video signal. Thus, even when a processing, such as dubbing or the like, of repeatedly processing the video signal by the video signal processing apparatus shown in FIG. 6, is carried out, it is possible to prevent picture quality from being deteriorated.

Operation of the video signal processing apparatus shown in FIG. 6 will be described.

As shown in FIG. 6, the chroma signal Cin from a signal source (not shown) is supplied through the input terminal 40 to the chroma decoders 43, 44. The subcarrier RC of the red color difference signal R-Y from the APC circuit (not shown) or the like is supplied through the input terminal 41 to the chroma decoder 43. Then, the subcarrier BC of the blue color difference signal B-Y from the APC circuit (not shown) or the like is supplied through the input terminal 42 to the chroma decoder 44.

The chroma decoder 43 decodes the chroma signal Cin supplied thereto through the input terminal 40 based on the subcarrier RC and the low-pass filter (not shown) provided within the chroma decoder 43 filters out the decoded signal to provide a red color difference signal R-Y as an envelope signal.
The chroma decoder 44 decodes the chroma signal Cin supplied thereto through the input terminal 40 based on the subcarrier BC and the low-pass filter (not shown) provided within the chroma decoder 44 filters out the decoded signal to provide a blue color difference signal B-Y as an envelope signal.

The red color difference signal R-Y is supplied to the multiplying circuit 47a-1 and also sequentially supplied to the delay circuits 46-1, 46-2, ..., 46-n, in which it is sequentially delayed by each 1H and then supplied to the multiplying circuits 47b-1, 47a-2, 47b-2, ..., 47a-n, respectively. Then, the signals are multiplied with coefficients a1, b2, a2, b2, ..., an by the multiplying circuits 47a-1, 47b-1, .., 47a-n and then added by the adding circuit 48, thereby being output as the averaged red color difference signal R-Y through the output terminal 49.

The blue color difference signal B-Y is supplied to the multiplying circuit 52a-1 and also sequentially supplied to the delay circuits 51-1, 51-2, ..., 51-n, in which it is sequentially delayed by each 1H and then supplied to the multiplying circuits 52b-1, 52a-2, 52b-2, ..., 52a-n, respectively. Then, the signals are multiplied with coefficients a1, b1, a2, b2, ..., an by the multiplying circuits 52a-1, 52b-1, .., 52a-n and then added by the adding circuit 53, thereby being output as the averaged blue color difference signal B-Y through the output terminal 54.

In other words, the red color difference signal R-Y is averaged by the FIR filter 45 and the blue color difference signal B-Y is averaged by the FIR filter 50. Thus, the shift of hue can be corrected and a satisfactory picture can be obtained.

As described above, according to this embodiment, it is possible to prevent the occurrence of a mis-registration of the chroma signal C in the longitudinal direction relative to the luminance signal Y by selecting the number of taps of the FIR filters 45, 50 to be odd-number. In the case of the previously proposed system in which 1H delay lines are used, the position (center of gravity) of the decoded chroma signal C is shifted by the delay time of 1/2H in the lower direction as described above. Since however it is customary that the position of the luminance signal Y is shifted at the unit of only 1H (so long as the luminance signal Y is not filtered out by the low-pass filter), the positions of the luminance signal Y and the chroma signal C cannot be matched accurately. However, according to this embodiment, it is possible to make the delay time of the chroma signal C become an integral multiple of 1H by selecting the number of taps of the FIR filters 45, 50 to be odd-number. Thus, it is possible to match the positions of the luminance signal Y and the chroma signal C accurately. Specifically, even when the dubbing is repeated, positional relationship between the luminance signal Y and the chroma signal C can be prevented from being changed. Thus, it is possible to prevent picture quality from being deteriorated that a blue area is progressively reduced each time a picture composed of a red upper portion and a blue lower portion is dubbed repeatedly. Therefore, it is possible to obtain a satisfactory image.

Further, by increasing the number of taps of the FIR filters, it is possible to improve the frequency characteristic in the vertical direction, i.e., to steepen an attenuation characteristic provided near the cut-off frequency. Thus, even when the processing, such as the dubbing in the VTR, of repeatedly processing the video signal by the video signal processing apparatus shown in FIG. 6, is effected, it is possible to prevent picture quality from being deteriorated that a boundary of color, for example, is blurred (or color becomes light).

A video signal processing apparatus according to a second embodiment of the present invention will be described with reference to FIG. 9. In FIG. 9, like parts corresponding to those of FIG. 6 are marked with the same references and therefore need not be described in detail.

As shown in FIG. 9, there is provided a switch 54 having one fixed contact 54a, another fixed contact 54b and a movable contact 54c. An output terminal of the adding circuit 48 is connected to the fixed contact 54a of the switch 54, and an output terminal of the adding circuit 53 is connected to another fixed contact 54b of the switch 54. The switch 54 is turned on and off under the control of a control signal LALT supplied thereto from a main body circuit such as a VTR (not shown) or the like through an input terminal 55. The control signal LALT is used to convert the chroma signal, modulated in a phase alternation line fashion, to a line-sequential signal. The output obtained when the output from the adding circuit 48 or 53 was switched by the switch 54, i.e., the red or blue color difference signal R-Y or B-Y is output through an output terminal 56 as a video signal according to the chroma line-sequential format.

As shown in FIG. 9, according to this embodiment, the PAL video signal is converted to the video signal of the chroma line-sequential format by using FIR filters 60, 61 each having three taps. Coefficients on the column of "3 taps" on the table of FIG. 7 are used as coefficients of the respective taps of the FIR filters 60, 61.

As shown in FIG. 9, the multiplying circuits 47-2 and 52-2 of the FIR filters 60, 61 have the center taps, respectively, and the coefficients thereof become 1/2. Accordingly, the coefficients of the FIR filters 60, 61 are 1/4 + 1/4 = 1/2 and the equation (1) is therefore satisfied.

Conversion of the PAL video signal to the video signal of the chroma line sequential format will be described with reference to FIG. 10. According to this embodiment, it is assumed that the PAL video signal is applied to a line-sequential format recording apparatus and a line-sequential format communication terminal. In accordance with the line sequential format, red and blue color difference signals R-Y, B-Y of a component color video signal (composed of a luminance signal Y and red and blue color difference signals R-Y, B-Y) are decimated by each scanning line and then sequentially recorded or transmitted.

In FIG. 10, reference symbol Y depicts a luminance signal, reference symbols R-Y, B-Y depict red and blue color difference signals, reference symbol Cout depicts a line-sequential chroma signal C finally output, and reference symbol LALT depicts a control signal under which the PAL video signal is converted to the video signal of the chroma line-sequential format. A pulse length of the control signal LALT is 1H (= 64 microseconds), for example.

The above-mentioned conversion will be described in association with the video signal processing apparatus shown in FIG. 9.

The luminance signal Y is processed by the luminance signal processing system and then output. As shown in FIG. 10, one line of the red color difference signal R-Y is composed of CR0, CR1, CR2, ..., and one line of the blue color difference signal B-Y is composed of CB0, CB1, CB2, ... When the control signal LALT goes to logic high "1" level, the switch 54 connects the movable contact 54c to the fixed contact 54a so that the CB0 of the red color difference signal R-Y is output through the output terminal 56 as shown in the line-sequential formatted chroma signal Cout. When the control signal LALT goes to logic low "0" level, the switch 54 connects the movable contact 54c to the fixed contact 54b so that the CB1 of the blue color difference signal B-Y is output through the output terminal 56 as shown in the line-sequential formatted chroma signal Cout.

When the control signal LALT goes to logic high "1" level, the switch 54 connects the movable contact 54c to the fixed contact 54a so that the CR2 of the red color difference signal R-Y is output through the output terminal 56 as shown in the line-sequential formatted chroma signal Cout. When the control signal LALT goes to logic low "0" level, the switch 54 connects the movable contact 54c to the fixed contact 54b so that the CB3 of the blue color difference signal B-Y is output through the output terminal 56 as shown in the line-sequential formatted chroma signal Cout.

When the control signal LALT goes to logic high "1" level, the switch 54 connects the movable contact 54c to the fixed contact 54a so that the CR4 of the red color difference signal R-Y is output through the output terminal 56 as shown in the line-sequential formatted chroma signal Cout. When the control signal LALT goes to logic low "0" level, the switch 54 connects the movable contact 54c to the fixed contact 54b so that the CB5 of the blue color difference signal B-Y is output through the output terminal 56 as shown in the line-sequential formatted chroma signal Cout. Then, when the control signal LALT goes to logic high "1" level, the switch 54 connects the movable contact 54c to the fixed contact 54a so that the CR6 of the red color difference signal R-Y is output through the output terminal 56 as shown in the line-sequential formatted chroma signal Cout. The red and blue color difference signals R-Y and B-Y are similarly output through the output terminal 56 in a line-sequential fashion.

As shown in the line-sequential formatted chroma signal Cout, the chroma signal Cout becomes the red color difference signal R-Y on the even-numbered line and becomes the blue color difference signal B-Y on the odd-numbered line. The line-sequential format chroma signal Cout is recorded on a recording medium by a VTR (not shown) or transmitted, for example. The line-sequential formatted chroma signal Cout may become the blue color difference signal B-Y on the even-numbered line and become the red color difference signal R-Y on the odd-numbered line.

As is clear from the above description, the scanning lines of the red and blue color difference signals R-Y and B-Y are decimated one by one according to the line-sequential format. However, if the scanning lines of the red and blue color difference signals R-Y and B-Y are decimated simply, there then occurs an aliasing noise in the longitudinal direction. As a result, "signal having only one scanning line colored by a certain color" loses color information. There is then the possibility that such signal cannot be visually confirmed by the viewer as color.

To solve this problem, according to this embodiment, the red and blue color difference signals R-Y and B-Y are filtered out in the longitudinal direction by the FIR filters 60, 61 and then decimated in scanning line in a line-sequential fashion as shown in FIG. 9. At that time, if the coefficients of the taps of the FIR filters 60, 61 satisfy the aforesaid equation (1) and the number of taps is selected to be 3 or greater and is also selected to be odd-number, it is then possible to correctly average the red and blue color difference signals R-Y and B-Y.

As described above, according to this embodiment, since the number of taps is selected to be "3", the red and blue color difference signals R-Y and B-Y are averaged by the FIR filters 60, 61 in which the coefficients are set so as to satisfy the aforementioned equation (1) and these averaged red and blue color difference signals R-Y and B-Y are switched at every 1H period and converted to the line-sequential format red and blue color difference signals, it is possible to prevent the occurrence of mis-registrations of the chroma signal C in the longitudinal direction relative to the luminance signal Y. Also, the frequency characteristic in the vertical direction can be improved, whereby the deterioration of the image quality can considerably be decreased even when the dubbing is repeated. In addition, the video signal processing apparatus can be simplified in arrangement and made inexpensive so that, when this video signal processing apparatus is mounted on a consumer VTR or the like, the consumer VTR can be made inexpensive and can provide an image of satisfactory picture quality.

A first specific example of the video signal processing apparatus according to the second embodiment of the present invention will be described with reference to FIG. 11. In FIG. 11, like parts corresponding to those of FIGS. 6 and 9 are marked with the same references and therefore need not be described in detail,

As shown in FIG. 11, according to this specific example, the PAL video signal is converted to the video signal of the chroma line-sequential format by using FIR filters 65, 66 each having 7 taps. Coefficients on the column of "7 taps" on the table shown in FIG. 7 are used as coefficients of the taps of the FIR filters 65, 66.

As shown in FIG. 11, the coefficients of the taps of the FIR filters 65, 66 satisfy the equation (1) as in -1/32 + 9/32 + 9/32 + - 1/32 = 0 + 1/2 + 0.

As shown in FIG. 11, the red color difference signal R-Y from the chroma decoder 43 is supplied to the multiplying circuit 47-1 and also sequentially supplied to the delay circuits 46-1, 46-2, ..., 46-6, in which it is sequentially delayed by each 1H and then supplied to the multiplying circuits 47-2, 47-3, ..., 47-7. Further, the signals are multiplied with predetermined coefficients by the multiplying circuits 47-1, 47-2, ..., 47-7 and added by the adding circuit 48, whereafter the added signal is supplied to the fixed contact 54a of the switch 54.

The blue color difference signal B-Y from the chroma decoder 44 is supplied to the multiplying circuit 52-1 and also sequentially supplied to the delay circuits 51-1, 51-2, ..., 51-6, in which it is sequentially delayed by each 1H and then supplied to the multiplying circuits 52-2, 52-3, ..., 52-7. Then, the signals are multiplied with predetermined coefficients by the multiplying circuits 52-1, 52-2, ..., 52-7 and added by the adding circuit 53, whereafter the added signal is supplied to the fixed contact 54b of the switch 54.

The switch 54 is changed in position under the control of the control signal LALT supplied thereto through the input terminal 55. As earlier noted with reference to FIG. 8, when the control signal LALT goes to logic high "1" level, the switch 54 connects the movable contact 54c to the fixed contact 54a so that the red color difference signal R-Y is output through the output terminal 56. When on the other hand the control signal LALT goes to logic low "0" level, the switch 54 connects the movable contact 54 to the fixed contact 54b so that the blue color difference signal B-Y is output through the output terminal 56. Thus, the chroma signal according to the chroma line-sequential format is output through the output terminal 56.

As described above, according to this example, since the number of taps is selected to be "7", the red and blue color difference signals R-Y and B-Y are averaged by the FIR filters 65, 66 in which the coefficients are properly set so as to satisfy the aforementioned equation (1) and these averaged red and blue color difference signals R-Y and B-Y are switched at every 1H period under the control of the control signal LALT and converted to the line-sequential formatted red and blue color difference signals, it is possible to prevent the occurrence of mis-registrations of the chroma signal in the longitudinal direction relative to the luminance signal without using the delay circuit with the 1H delay time. Also, the frequency characteristic in the vertical direction can be improved, whereby deterioration of picture quality can considerably be decreased even when the dubbing or the like is repeated.

A second example of the video signal processing apparatus according to the second embodiment of the present invention will be described with reference to FIG. 12. An FIR filter shown in FIG. 12 corresponds to the FIR filters 65, 66 shown in the circuit arrangement shown in FIG. 11. In this example, other elements and parts than the FIR filter are similar to those of FIG. 10 and therefore need not be described in detail.

As shown in FIG. 12, the red or blue color difference signal R-Y or B-Y from the chroma decoder 43 or 44 is supplied to an input terminal 67. The input terminal 67 is connected to an input terminal of a multiplying circuit 68 and to an input terminal of a delay circuit 68. An output terminal of the delay circuit 68 is connected to an input terminal of a delay circuit 69, and an output terminal of the delay circuit 69 is connected to an input terminal of a delay circuit 70, ..., an output terminal of a delay circuit 84 is connected to the an input terminal of a delay circuit 85, respectively. Further, output terminals of the delay circuits 68, 69, ..., 85 are connected to input terminals of multiplying circuits 87, 88, ..., 104. Output terminals of the multiplying circuits 86, 87, ..., 104 are connected to input terminals of an adding circuit 105, and an output terminal 106 is led out from an output terminal of the adding circuit 105.

As shown in FIG. 12, the number of taps of the FIR filter is selected to be 19. Coefficients on the column of "19 taps" on the table shown in FIG. 7 are used as coefficients of the FIR filter shown in FIG. 12. As shown in FIGS. 12 and 7, coefficients of these taps of this FIR filter can satisfy the aforesaid equation (1) as in $35/217 + (-405/217) + 2268/217 + (-8820/217) + 39690/217 + 39690/217 + (-8820/217) + 2268/217 + (-405/217) = 0 + 0 + 0 + 0 + 1/2 + 0 + 0 + 0 + 0$.

Operation of the FIR filter shown in FIG. 12 will be described under assumption such that the FIR filters 65, 66 shown in FIG. 11 are replaced with the FIR filter shown in FIG. 12.

As shown in FIG. 12, the red color difference signal R-Y from the chroma decoder 43 is supplied to the multiplying circuit 86 and also sequentially supplied to the delay circuits (DL) 68, 69, ..., 85, in which it is sequentially delayed by each 1H period and then supplied to the multiplying circuits 87, 88, ..., 104, respectively. The red color difference signal R-Y or the delayed red color difference signal R-Y supplied to the multiplying circuits 86, 87, ..., 104 are multiplied with the predetermined coefficients and added by the adding circuit 105 and then output through the output terminal 106.

On the other hand, the blue color difference signal B-Y from the chroma decoder 44 is supplied to the multiplying circuit 86 and also sequentially supplied to the delay circuits 68, 69, ..., 85, in which it is sequentially delayed by each 1H period and then supplied to the multiplying circuits 87, 88, ..., 104, respectively. The blue color difference signal B-Y or the delayed blue color difference signal B-Y supplied to the multiplying circuits 86, 87,..., 104 are multiplied with the predetermined coefficients and added by the adding circuit 105 and then output through the output terminal 106.

When the PAL chroma signal is converted to the line-sequential formatted chroma signal similarly to FIG. 11, the red and blue color difference signals R-Y and B-Y are switched by the switch 54 and recorded on the recording medium by the VTR (not shown) or transmitted similarly as described above.

As described above, according to this example, since the number of taps is selected to be "19", the red and blue color difference signals R-Y and B-Y are averaged by the FIR filter in which the coefficients are properly set so as to satisfy the aforementioned equation (1) and these averaged red and blue color difference signals R-Y and B-Y are switched at every 1H period under the control of the control signal LALT and converted to the line-sequential formatted red and blue color difference signals, it is possible to prevent the occurrence of mis-registration of the chroma signal in the longitudinal direction relative to the luminance signal without using the delay circuit with the 1H delay time. Also, the frequency characteristic in the vertical direction can be improved, whereby deterioration of picture quality can considerably be decreased even when the dubbing or the like is repeated.

FIG. 13 is a schematic diagram used to explain remarkable effects achieved by the embodiments that were sequentially described with reference to FIGS. 6 to 12. The embodiments will further be described with reference to FIG. 13.

In FIG. 13, reference symbols Pa20, Pa21, Pa22 and Pa23 depict image patterns on the picture screens, respectively. Reference symbols Si20, Si21, Si22 and Si23 depict signals with the image patterns Pa20, Pa21, Pa22 and Pa23 in which hatched portions represent "colored fine horizontal lines (or "boundaries of color"), respectively. Reference symbols Lv20, Lv21, Lv22 and Lv23 depict levels of the signals Si20, Si21, Si22 and Si23 at their portions corresponding to the hatched portions of the image patterns Pa20, Pa21, Pa22 and Pa23. In FIG. 13, the image pattern Pa20 represents the image pattern of the original image.

According to the video signal processing apparatus of this embodiment, it is possible to considerably reduce the displacement of image caused by mis-registration in the vertical direction shown in FIG. 3. Also, it is possible to considerably reduce the increased width of the high frequency component in the vertical direction and the lowered color level due to the unsatisfactory vertical frequency characteristic shown in FIG. 12. It is needless to say that the disadvantage of FIG. 5 which includes both of the disadvantages shown in FIGS. 3 and 4 can be obviated according to the video signal processing apparatus of this embodiment.

In the video signal processing apparatus according to this embodiment, if the image pattern Pa20 is processed once by the circuit, then the image pattern Pa20 is changed to the image pattern Pa21. As shown by the image pattern Pa21, although the width of the hatched portion of the image pattern Pa21 is slightly increased as compared with that of the hatched portion of the image pattern Pa20 and the color thereof becomes slightly light because the hatched portion represents the colored fine horizontal line, i.e., the high vertical frequency component, the position of the hatched portion is not changed substantially. From a signal standpoint, the level Lv20 of the signal Si20 at its portion corresponding to the hatched portion of the image pattern Pa20 is very slightly lowered as shown by the level Lv21 of the signal Si21 at its portion corresponding to the hatched portion of the image pattern Pa21.

If the image pattern Pa20 is processed twice by the circuit, then the image pattern Pa20 is changed to the image pattern Pa22. As shown by the image pattern Pa22, the width of the hatched portion of the image pattern Pa22 is not changed substantially as compared with that of the hatched portion of the image pattern Pa21. A depth of color in the image pattern Pa22 is not changed substantially as compared with that of the color of the image pattern Pa21, and the position thereof is not shifted substantially. From a signal standpoint, the level Lv22 of the signal Si22 at its portion corresponding to the hatched portion of the image pattern Pa22 is not changed substantially as compared with the level Lv21 of the image signal Si21 at its portion corresponding to the hatched portion of the image pattern Pa21. Further, the peak portion of the signal Si22 is not shifted substantially from the original position shown by the dashed line.

If the image pattern Pa20 is processed three times by the circuit, then the image pattern Pa20 is changed to the image pattern Pa23. As shown by the image pattern Pa23, the width of the hatched portion of the image pattern Pa23 is not changed substantially as compared with that of the hatched portion of the image pattern Pa22. Also, a depth of color of the hatched portion of the image pattern Pa23 is not changed substantially as compared with that of the color of the hatched portion of the image pattern Pa22 and the position thereof is not shifted substantially. From a signal standpoint, the level Lv23 of the signal Si23 at its portion corresponding to the hatched portion of the image pattern Pa23 is not changed substantially as compared with the level Lv22 of the signal Si22 at its portion corresponding to the image pattern Pa22 and the peak portion of the signal Si23 is not displaced substantially from the original position shown by the dashed line.

According to the video signal processing apparatus of the embodiments shown in FIGS. 6 to 12, even when the dubbing is repeated, the high frequency component can be avoided from being displaced in the vertical direction, the color level of the image can be prevented from being lowered and the increased width of the high frequency component of the image can be minimized. Thus, it is possible to obtain a satisfactory image by considerably decreasing the deterioration of picture quality. Furthermore, even when the chroma decoder includes the 1H delay line, it is possible to improve the disadvantages described with reference to FIG. 13.

While mis-registration is referred to as "positional displacement of color boundary and edge portion of image" as described above, in actual practice, all pixels on the picture screen are displaced in position. The reason that mis-registration is referred to as "positional displacement of color boundary and edge portion of image" is that other portions than the color boundary and edge portion of the image are made inconspicuous visually.

The hue of the chroma signal of the PAL video signal can be corrected by averaging the color difference signals as described above with reference to FIG. 6. Further, the hue of the chroma signal of the PAL video signal can be corrected by averaging the color difference signals and by converting the color difference signals to the chroma line-sequential formatted signals as described above with reference to FIGS. 9, 11 and 12. In any cases, it is needless to say that similar effects can be achieved so long as the number of taps of the FIR filter is selected to be odd-number of 3 or greater and the coefficients of the taps are properly set so as to satisfy the equation (1).

The FIR filters shown in FIGS. 6, 9, 11 and 12 are referred to as "half band and maximally-flat characteristic filters" wherein a coefficient of every other tap becomes "0" and the number of multiplying circuit is reduced. For this reason, this kind of FIR filter is used to limit the band by half. Coefficients of most of such FIR filters are determined and therefore all of such FIR filters can satisfy the condition of the equation (1).

While the PAL video signal is handled as the case that the signal, modulated in a phase alternation line fashion, is averaged as described above, the present invention is not limited thereto and any signals can be used so long as the signals had been modulated in a phase alternation line fashion.

According to the embodiments set forth above, since the red color difference signal R-Y from the decoder which extracts the red and blue color difference signals R-Y and B-Y from the input video signal in which the color difference signals are inverted in polarity at every horizontal period is averaged by the first averaging means composed of taps whose number is at least 3 or greater and odd-number and the adding circuit for adding the outputs of these taps and the blue color difference signal B-Y from the decoder is averaged by the second averaging means composed of the taps whose number is at least 3 or greater and odd-number and the adding circuit for adding the outputs of these taps without using the delay means with the delay time of at least one horizontal period, it is possible to prevent the occurrence of mis-registration of the chroma signal in the longitudinal direction relative to the luminance signal. Also, it is possible to improve the frequency characteristic in the vertical direction. Thus, it is possible to considerably reduce picture quality from being deteriorated even when the dubbing is repeated.

Furthermore, according to the embodiments set forth above, since the color difference signals are averaged by using the averaging means in which the total sum of the coefficients of the even-numbered taps and the total sum of the coefficients of the even-numbered taps are made equal, in addition to the above-mentioned effects, the occurrence of mis-registration can be prevented and the vertical frequency characteristic can be improved. Therefore, it is possible to obtain a satisfactory image even when the dubbing or the like is repeated.

Having described preferred embodiments of the invention with reference to the accompanying drawings, it is to be understood that the invention is not limited to those precise embodiments and that various changes and modifications could be effected therein by one skilled in the art without departing from the scope of the invention as defined in the appended claims.

**Claims**

1. A video signal processing circuit comprising:

   a decoder for decoding a composite color difference signal modulated such that two color difference signals are inverted in polarity at every horizontal period to provide a red color difference signal R-Y and a blue color difference signal B-Y;

   a first filter composed of 2N delay means, where $N$ is a positive integer, for sequentially delaying said red color difference signal R-Y from said decoder by one horizontal period each, (2N+1) multiplying circuits, each for multiplying with a predetermined coefficient a respective one of said color difference signals R-Y delayed by said 2N delay means and said color difference signal supplied thereto from said decoder, and an adding circuit for adding outputs of said multiplying circuits; and

   a second filter composed of 2N delay means for sequentially delaying said blue color difference signal B-Y from said decoder by one horizontal period each, (2N+1) multiplying circuits, each for multiplying with a predetermined coefficient a respective one of said blue color difference signals B-Y delayed by said 2N delay means and said color difference signal supplied thereto from said decoder, and an adding circuit for adding outputs of said multiplying circuits,

   wherein a total sum of coefficients of odd-numbered multiplying circuits and a total sum of coefficients of even-numbered multiplying circuits in said first filter are made equal, and a total sum of coefficients of odd-numbered multiplying circuits and a total sum of coefficients of even-numbered multiplying circuits in said second filter are made equal.

2. A video signal processing circuit according to claim 1, further comprising switching means for switching and outputting an added output of said adding circuit in said first filter and an added output of said adding circuit in said second filter in a line-sequential fashion.

**Patentansprüche**

1. Videosignal-Verarbeitungsschaltung, die umfaßt:

   einen Decodierer zum Decodieren eines zusammengesetzten Farbdifferenzsignals, welches so moduliert ist, daß zwei Farbdifferenzsignale bezüglich der Polarität bei jeder Horizontalperiode invertiert sind, um ein Farbdifferenz-Rot-Signal R-Y und ein Farbdifferenz-Blau-Signal B-Y bereitzustellen;

   ein erstes Filter, welches aus 2N Verzögerungseinrichtungen besteht, wobei N eine positive ganze Zahl ist, um nacheinander das Farbdifferenz-Rot-Signal R-Y vom Decodierer jeweils um eine Horizontalperiode zu verzögern, aus (2N+1) Multiplizierschaltungen, eine jede zum Multiplizieren mit einem vorherbestimmten Koeffizienten ein entsprechendes der Farbdifferenzsignale R-Y, die durch die 2N Verzögerungseinrichtung verzögert sind, und des Farbdifferenzsignals, welches vom Decodierer zugeführt wird, und aus einer Addierschaltung zum Addieren von Ausgangssignalen der Multiplizierschaltungen; und

   ein zweites Filter, welches aus 2N Verzögerungseinrichtungen besteht, um nacheinander das Farbdifferenz-Blau-Signal B-Y jeweils um eine Horizontalperiode zu verzögern, aus (2N+1) Multiplizierschaltungen, eine jede zum Multiplizieren mit einem vorherbestimmten Koeffizienten ein entsprechendes der Farbdifferenz-Blau-Signale B-Y, die durch die 2N Verzögerungseinrichtungen verzögert sind, und des Farbdifferenzsignals, welches vom Decodierer zugeführt wird, und aus einer Addierschaltung zum Addieren von Ausgangssignalen der Multiplizierschaltungen,

wobei eine Gesamtsumme von Koeffizienten der ungeradzahlig-numerierten Multiplizierschaltungen und eine Gesamtsumme von Koeffizienten der geradzahlig-numerierten Multiplizierschaltungen im ersten Filter gleich gemacht werden, und eine Gesamtsumme von Koeffizienten der ungeradzahlig-numerierten Multiplizierschaltungen und eine Gesamtsumme von Koeffizienten der geradzahlig-numerierten Multiplizierschaltungen im zweiten Filter gleich gemacht werden.

2. Videosignal-Verarbeitungsschaltung nach Anspruch 1, die außerdem eine Umschalteinrichtung umfaßt, um ein Additionsausgangssignal der Addierschaltung im ersten Filter und ein Additionsausgangssignal der Addierschaltung im zweiten Filter zeilen-sequentiell umzuschalten und auszugeben.

**Revendications**

1. Circuit de traitement de signal vidéo comprenant :

un décodeur pour décoder un signal de différence de couleur composite modulé pour que deux signaux de différence de couleur soient inversés en polarité à chaque période horizontale pour fournir un signal de différence de couleur rouge R-Y et un signal de différence de couleur bleue B-Y ;

un premier filtre composé des 2N moyens à retard, où N est un entier positif, pour retarder séquentiellement ledit signal de différence de couleur rouge R-Y dudit décodeur d'une période horizontale chacune, (2N+1) circuits de multiplication, chacun pour multiplier avec un coefficient prédéterminé un desdits signaux de différence de couleur R-Y retardé par lesdits 2N moyens de retard et ledit signal de différence de couleur fourni à celui-ci par ledit décodeur, et un circuit d'addition pour additionner des sorties desdits circuits de multiplication ; et

un second filtre composé de 2N moyens de retard pour retarder séquentiellement ledit signal de différence de couleur bleue B-Y par ledit décodeur d'une période horizontale chacun, (2N+1) circuits de multiplication, chacun pour multiplier par un coefficient prédéterminé respectif desdits signaux de différence de couleur bleue B-Y retardé par lesdits 2N moyens de retard et ledit signal de différence de couleur fourni à celui-ci par ledit décodeur, et un circuit d'addition pour additionner des sorties desdits circuits de multiplication,

dans lequel une somme totale des coefficients des circuits de multiplication numérotés impairs et une somme totale des coefficients des circuits de multiplication numérotés pairs dans ledit premier filtre sont rendus égales et une somme totale des coefficients des circuits de multiplication numérotés impairs et une somme totale des coefficients des circuits de multiplication numérotés pairs dans ledit second filtre sont rendus égales.

2. Circuit de traitement de signal vidéo selon la revendication 1, comprenant en outre un moyen de commutation pour commuter et fournir une sortie additionnée dudit circuit d'addition dans ledit premier filtre et une sortie additionnée dudit circuit d'addition dans ledit second filtre d'une manière séquentielle en ligne.

# FIG. 1

EP 0 649 264 B1

# FIG. 2

EP 0 649 264 B1

# FIG. 3

Pa1  Pa2  Pa3

# FIG. 4

Pa4    Si4    Pa5    Si5    Pa6    Si6    Pa7    Si7

Lv4         Lv5          Lv6          Lv7

# FIG. 5

Pa8    Si8    Lv8

Pa9    Si9    Lv9

Pa10    Si10    Lv10

Pa11    Si11    Lv11

EP 0 649 264 B1

FIG. 6

## FIG. 7

| Number of Taps | h(1) | h(3) | h(5) | h(7) | h(9) |
|---|---|---|---|---|---|
| 3 Taps | 1/4 | 0 | 0 | 0 | 0 |
| 7 Taps | 9/32 | -1/32 | 0 | 0 | 0 |
| 11 Taps | 150/512 | -25/512 | 3/512 | 0 | 0 |
| 15 Taps | 1225/4096 | -245/4096 | 49/4096 | -5/4096 | 0 |
| 19 Taps | $39690/2^{17}$ | $-8820/2^{17}$ | $2268/2^{17}$ | $-405/2^{17}$ | $35/2^{17}$ |

## FIG. 8

EP 0 649 264 B1

# FIG. 9

# FIG. 10

EP 0 649 264 B1

| Y | Y0 | Y1 | Y2 | Y3 | Y4 | Y5 | Y6 |

| R-Y | CR0 | CR1 | CR2 | CR3 | CR4 | CR5 | CR6 |

| B-Y | CB0 | CB1 | CB2 | CB3 | CB4 | CB5 | CB6 |

| Cout | CR0 | CB1 | CR2 | CB3 | CR4 | CB5 | CR6 |

LALT

FIG. 11

EP 0 649 264 B1

22

# FIG. 12

R-Y or B-Y — 86 — h(9)

67

68 — DL — 87 — 0

69 — DL — 88 — h(7)

70 — DL — 89 — 0

71 — DL — 90 — h(5)

72 — DL — 91 — 0

73 — DL — 92 — h(3)

74 — DL — 93 — 0

75 — DL — 94 — h(1)

76 — DL — 95 — 1/2

77 — DL — 96 — h(1)

78 — DL — 97 — 0

79 — DL — 98 — h(3)

80 — DL — 99 — 0

81 — DL — 100 — h(5)

82 — DL — 101 — 0

83 — DL — 102 — h(7)

84 — DL — 103 — 0

85 — DL — 104 — h(9)

Adding Ckt.

105
R-Y or
B-Y

106

# FIG. 13

EP 0 649 264 B1

Pa20     Si20     Lv20

Pa21     Si21     Lv21

Pa22     Si22     Lv22

Pa23     Si23     Lv23